# DEMANDE DE BREVET EUROPEEN

(11) **EP 0 779 190 A1**
(43) Date de publication de la demande: **18.06.1997**
(21) Numéro de dépôt: 95119561.9
(22) Date de dépôt: 12.12.1995
(51) Int. Cl.: B60S 1/24, F16C 33/08, B60S 1/04

(54) **Palier de support en tôle pour un arbre d'essuie-glace**

(71) Demandeur: VALEO SYSTEMES D'ESSUYAGE, 78321 La Verrière (FR)
(72) Inventeur: Eustache, Jean-Pierre, F-92160 Antony (FR)
(74) Mandataire: Gamonal, Didier

(57) **Abrégé**

L'invention propose un palier de support pour un arbre (28) d'essuie-glace de véhicule automobile du type comportant un corps de palier (24) qui est traversé par un trou pour le passage de l'arbre (28) et qui comporte un manchon (22) destiné à recevoir l'extrémité d'un élément de structure (20) appartenant à une platine-support (10) d'un mécanisme d'essuie-glace, caractérisé en ce que le corps de palier (24) est réalisé en tôle.

## Description

La présente invention concerne un palier de support pour un arbre d'essuie-glace de véhicule automobile.

L'invention concerne plus particulièrement un palier de support du type comportant un corps de palier gui est traversé par un trou pour le passage de l'arbre et qui comporte un manchon destiné à recevoir l'extrémité d'un élément de structure appartenant à une platine-support d'un mécanisme d'essuie-glace.

Selon une conception connue, la platine-support du mécanisme d'essuie-glace comporte une plaque de support sur laquelle est fixé un élément de structure de forme générale tubulaire allongée dont chacune des extrémités est emmanchée et sertie dans un logement en forme complémentaire de manchon réalisé venu de matière par moulage dans un palier de support réalisé sous la forme d'une pièce de fonderie en alliage léger tel que par exemple le "zamac".

La réalisation d'un palier de support sous la forme d'une pièce de fonderie est particulièrement coûteuse car elle nécessite la réalisation d'un moule de fonderie spécifique et elle a de plus pour inconvénient d'aboutir à l'obtention d'une pièce dont le poids est élevé.

Enfin, il est nécessaire que les dimensions du trou brut de fonderie qui reçoit les douilles de palier pour l'arbre tournant soit relativement précises pour éviter un éclatement de la pièce lors de l'emmanchement des douilles de palier.

La présente invention a pour but de proposer une nouvelle conception d'un palier de support du tue mentionné précédemment qui permette de remédier à ces inconvénients.

Dans ce but, l'invention propose un palier de support caractérisé en ce que le corps de palier est réalisé en tôle.

Selon d'autres caractéristiques de l'invention :
- le palier de support est réalisé sous la forme de deux demi-coquilles en tôle dont le plan de joint passe sensiblement par les axes du trou et du manchon ;
- le manchon s'étend selon une direction sensiblement perpendiculaire à l'axe du trou ;
- chaque demi-coquille comporte successivement un premier bord de liaison, un premier tronçon semi-cylindrique ouvert à ses deux extrémités qui délimite le trou, un deuxième bord de liaison sensiblement parallèle au premier bord de liaison et à l'axe du premier tronçon semi-cylindrique, et un second tronçon semi-cylindrique borgne qui délimite le manchon ;
- les deux demi-coquilles sont réalisées en deux pièces fixées entre elles ;
- les deux demi-coquilles sont reliées entre elles par leurs dits premiers bords de liaison et elles sont réalisées en une seule pièce par découpage et emboutissage ;
- les deux demi-coquilles sont fixées l'une à l'autre par soudage ;
- l'un au moins des bords de liaison de l'une au moins des deux demi-coquilles comporte au moins un bord rabattu à 180° qui enserre un bord de liaison en vis-à-vis de l'autre demi-coquille ;
- le palier de support comporte des moyens de serrage des deux demi-coquilles selon une direction sensiblement perpendiculaire au plan de joint ;
- des joints d'étanchéité sont agencés entre des surfaces en vis-à-vis des deux demi-coquilles ;
- le palier de support comporte des douilles de palier agencées dans le trou pour le montage à rotation de l'arbre.

D'autres caractéristiques et avantages de l'invention apparaîtront à la lecture de la description qui va suivre pour la compréhension de laquelle on se reportera aux dessins annexés dans lesquels :
- la figure 1 est une vue latérale schématique en élévation d'une des deux demi-coquilles du palier de support selon l'invention illustré à la figure 2 ;
- la figure 2 est une vue en perspective d'un premier mode de réalisation d'un palier de support réalisé conformément aux enseignements de l'invention et illustré en association avec certains composants d'un mécanisme d'essuie-glace ;
- les figures 3 à 5 sont des vues de détails en perspective illustrant différents modes d'assemblage et de fixation de deux demi-coquilles constituant un palier de support selon l'invention ; et
- la figure 6 est une vue latérale schématique, avant pliage, illustrant une conception selon laquelle les deux demi-coquilles sont réalisées en une seule pièce; et
- la figure 7 est une vue schématique en perspective illustrant une platine de support d'un mécanisme d'essuie-glace équipée de paliers de support selon l'état de la technique.

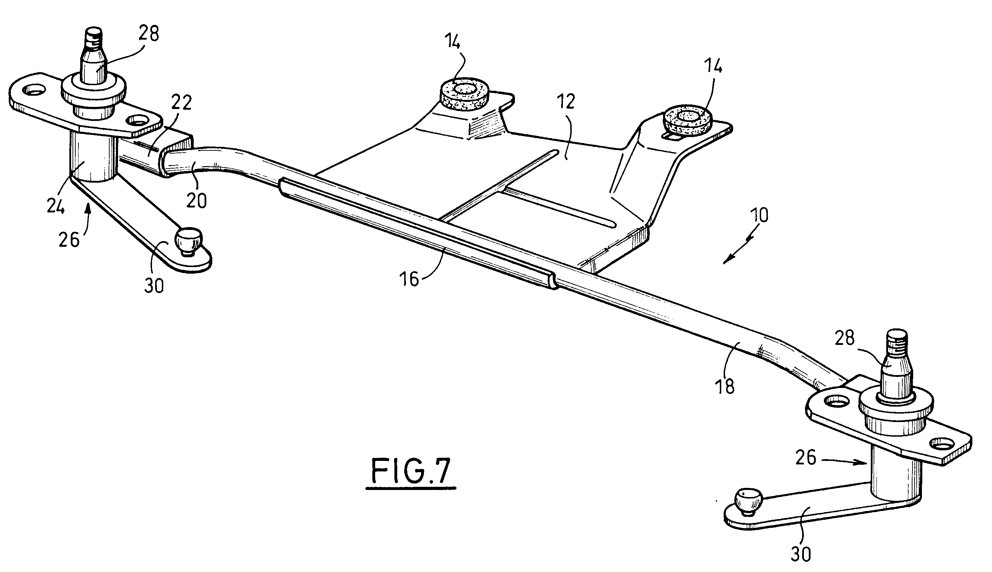

On a représenté sur la figure 7 une platine de support 10 constituée pour l'essentiel par une plaque-support 12 comportant des moyens 14 pour sa fixation sur la caisse d'un véhicule automobile (non représentée) et dont un bord 16 est soudé sur un élément tubulaire allongé 18 dont chacun des tronçons d'extrémité est reçu dans un manchon 22 appartenant au corps 24 d'un palier 26 de support en rotation d'un arbre 28 pour l'entraînement d'un essuie-glace (non représenté).

Chaque arbre d'essuie-glace 28 est lié en rotation à une manivelle 30 qui est prévue pour être reliée une tringlerie (non représentée) du mécanisme d'essuie-glace.

Selon l'état de la technique illustré à la figure 7, chacun des corps 24 des paliers de support 26 est réalisé sous la forme d'une pièce moulée en alliage léger.

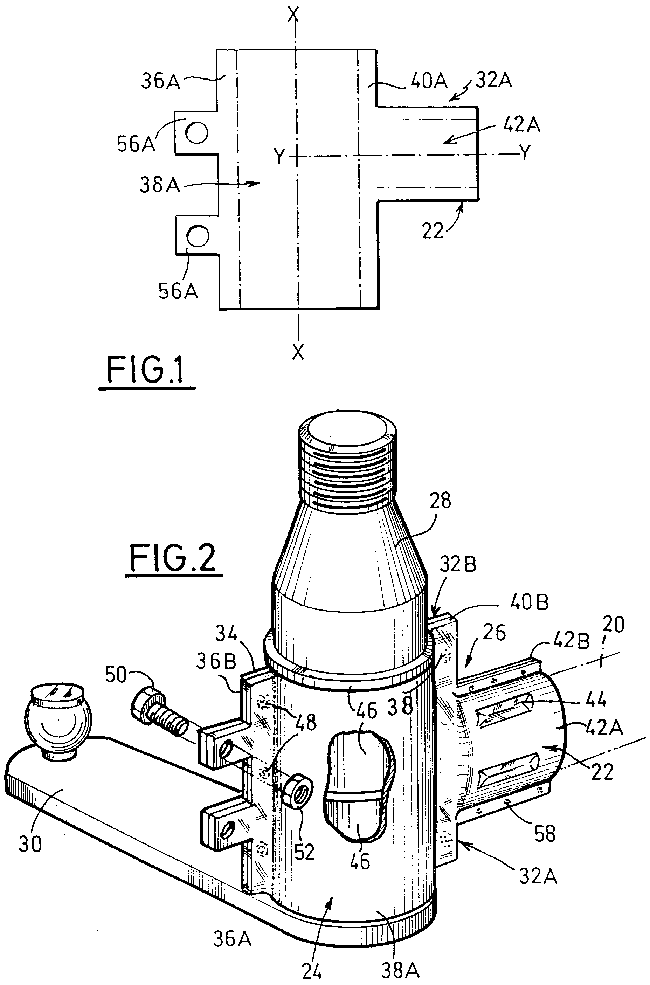

L'invention propose une nouvelle conception en tôle découpée pliée et emboutie d'un corps 24 de palier de support 26 qui est illustrée aux figures 1 à 5.

Conformément à l'invention, le corps 24 du palier de support 26 est réalisé sous la forme de deux demi-coquille 32A et 32B dont chacune est réalisée sous la forme d'une pièce en tôle découpée pliée et emboutie et qui sont reliées entre elles selon plan de joint 34 sensiblement plan.

Comme on peut le voir sur les figures, chaque demi-coquille 32A, 32B comporte successivement un premier bord de liaison plan en forme de bande 36A, 36B puis un premier tronçon semi-cylindrique embouti 38A, 38B d'axe X-X parallèle au premier bord 36A, 36B, puis un second bord rectiligne en forme de bande plate 40A, 40B.

Chaque demi-coquille 32A, 32B comporte également un second tronçon semi-cylindrique borgne 42A, 42B qui s'étend transversalement selon un axe Y-Y sensiblement perpendiculaire à l'axe X-X, depuis le second bord 40A, 40B.

Comme on peut le voir sur les figures 1 et 2, les deux tronçons semi-cylindriques 42A, 42B délimitent ensemble un manchon borgne 22 destiné à recevoir un tronçon d'extrémité 20 d'un élément tubulaire 18 auquel il est ultérieurement fixé par des sertissages 44.

Le trou traversant qui résulte, après assemblage, de la coopération de deux tronçons semi-cylindriques 38A, 38B est prévu pour recevoir deux douilles 46 de palier pour le guidage en rotation d'un arbre d'entraînement 28.

Dans le mode de réalisation illustré aux figures 1 et 2, la liaison entre les deux demi-coquilles 32A, 32B est assurée par des points de soudage 48 et par exemple par des organes de serrage du type à vice 50 et écrous 52 qui traversent des trous 54 formés venus de matière lors du découpage des tôles, dans des pattes transversales de liaison 56A, 56B qui s'étendent latéralement depuis les premiers bords de liaison 36A, 36B.

Des points de soudage 58 peuvent également être prévus le long des bords latéraux des seconds tronçons semi-cylindriques 42A, 42B.

Etant donné la grande élasticité des deux demi-coquilles en tôle, les douilles de palier 46 peuvent être emmanchées à force après la réalisation du palier de support sans provoquer aucun endommagement de son corps 24.

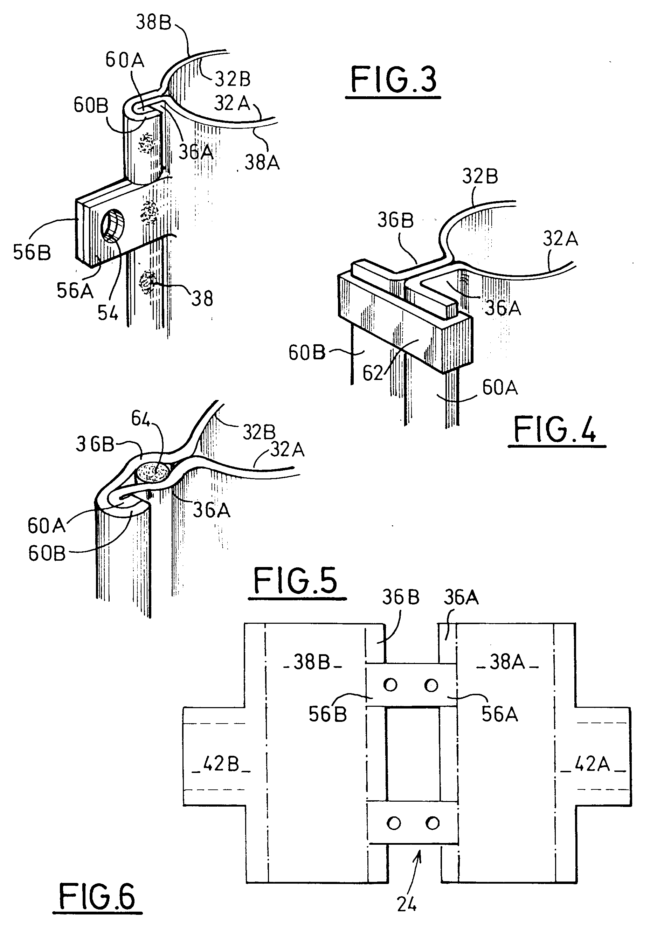

Comme on l'a représenté sur la figure 3, la liaison entre les deux demi-coquille 32A, 32B peut être complétée en repliant à 180° les bords longitudinaux d'extrémité 60A, 60B des premiers bords de liaison 36A, 36B de manière à assurer une liaison par emboîtement de ces bords qui est complétée par des points de soudage 48 des seconds bords de liaison 40A, 40B.

Dans la variante de réalisation illustrée sur la figure 4, les bords d'extrémités 60A et 60B sont repliés à 90° et ils sont assemblés entre eux par des pinces de serrage 62 repartis le long des ces bords.

Comme on l'a représenté sur la figure 1, des joints d'étanchéité 64 peuvent être interposés entre les surfaces en vis-à-vis des deux demi-coquilles 32A, 32B, au niveau de leur plan de joint, par exemple entre les bords de liaison plan 36A, 36B et 40A, 40B.

Le schéma de la figure 6 illustre une conception selon laquelle les deux demi-coquilles 32A, 32B sont réalisées en une seule pièce étant reliées entre elles au niveau de leurs premiers bords de liaison 36A, 36B et par exemple, dans l'exemple illustré, par leurs pattes 56A, 56B.

Cette conception permet de ne disposer que d'une seule pièce qui est ensuite pliée à 180° pour reconstituer le corps de palier 24.

L'invention n'est pas limitée au mode de réalisation et à ses variantes qui viennent d'être décrits, les moyens de liaison et de fixation entre les deux demi-coquilles pouvant revêtir de nombreuses formes et être associés entre eux.

## Revendications

1. Palier de support pour un arbre (28) d'essuie-glace de véhicule automobile du type comportant un corps de palier (24) qui est traversé par un trou pour le passage de l'arbre (28) et qui comporte un manchon (22) destiné à recevoir l'extrémité d'un élément de structure (20) appartenant à une platine-support (10) d'un mécanisme d'essuie-glace, caractérisé en ce que le corps de palier (24) est réalisé en tôle.

2. Palier de support selon la revendication 1, caractérisé en ce que le palier de support est réalisé sous la forme de deux demi-coquilles (32A, 32B) en tôle dont le plan de joint (34) passe sensiblement par les axes (X-X) du trou et (Y-Y) du manchon (22).

3. Palier de support selon la revendication 2, caractérisé en ce que le manchon (22) s'étend selon une direction sensiblement perpendiculaire à l'axe (X-X) du trou.

4. Palier de support selon l'une des revendications 2 ou 3, caractérisé en ce que chaque demi-coquille (32A, 32B) comporte successivement un premier bord de liaison (36A, 36B), un premier tronçon semi-cylindrique (38A, 38B) ouvert à ses deux extrémités qui délimitent le trou, un deuxième bord de liaison (40A, 40B) sensiblement parallèle au premier bord de liaison (36A, 36B) et l'axe (X-X) du premier tronçon semi-cylindrique (38A, 38B) et un second tronçon semi-cylindrique (42A, 42B) borgne qui délimite le manchon (22).

5. Palier de support selon l'une quelconque des revendications 2 à 4, caractérisé en ce que les deux demi-coquilles (32A, 32B) sont réalisées en deux pièces fixées entre elles.

6. Palier de support selon la revendication 4, caractérisé en ce que les deux demi-coquilles (32A, 32B) sont reliées entre elles par leurs dits premiers bords de liaison (36A, 36B), et en ce qu'elles sont réalisées en une seule pièce par découpage et emboutissage.

7. Palier de support selon l'une quelconque des revendications 2 à 6, caractérisé en ce que les deux demi-coquilles (32A,32B) sont fixées l'une à l'autre par soudage (38, 58).

8. Palier de support selon la revendication 4, caractérisé en ce que l'un au moins des bords de liaison (36A, 36B) de l'une au moins des deux demi-coquilles (32A, 32B) comporte au moins un bord (60A, 60B) rabattu à 180° qui enserre un bord de liaison en vis-à-vis de l'autre demi-coquille.

9. Palier de support selon l'une quelconque des revendications 2 à 8, caractérisé en ce qu'il comporte des moyens (50, 52, 62) de serrage des deux demi-coquilles (32A, 32B) selon une direction sensiblement perpendiculaire au plan de joint (34).

10. Palier de support selon la revendication 2, caractérisé en ce que des joints d'étanchéité (64) sont agencés entre des surfaces en vis-à-vis des deux demi-coquilles (32A, 32B).

11. Palier de support selon l'une quelconque des revendications précédentes, caractérisé en ce qu'il comporte des douilles de palier (46) pour le montage à rotation de l'arbre (28).
